Europäisches Patentamt

European Patent Office

Office européen des brevets

(11) Publication number: **0 293 616**
**A2**

## (12) EUROPEAN PATENT APPLICATION

(21) Application number: **88107074.2**

(22) Date of filing: **03.05.88**

(51) Int. Cl.⁴: **G06F 9/46**

(30) Priority: **04.06.87 US 58087**

(43) Date of publication of application:
**07.12.88 Bulletin 88/49**

(84) Designated Contracting States:
**DE FR GB**

(71) Applicant: **International Business Machines
Corporation
Old Orchard Road
Armonk, N.Y. 10504(US)**

(72) Inventor: **Georgiou, Christos John
14 Nosband Ave. No. 6H
White Plains N.Y. 10605(US)**
Inventor: **Rosenfeld, Philip Lewis
100 Round Hill Drive
Briarcliff Manor, N.Y. 10510(US)**

(74) Representative: **Jost, Ottokarl, Dipl.-Ing.
IBM Deutschland GmbH Patentwesen und
Urheberrecht Schönaicher Strasse 220
D-7030 Böblingen(DE)**

(54) **Dynamic switch with task allocation capability.**

(57) A switch for use in a star topology that monitors interprocessor communications activity and uses this information to improved system performance. The switch keeps track of idle processors in the system. When a new task is created for execution on an idle processor, it is sent to a switch which then directly routes it to the first available processor This eliminates overhead which otherwise is incurred if the task were first transmitted to a processor serving as a task dispatcher from where it would subsequently be sent to an idle application processor.

**FIG. 2**

## DYNAMIC SWITCH WITH TASK ALLOCATION CAPABILITY

The present invention relates generally to multiprocessor computer systems and more specifically relates to a switch having task allocation capabilities for use in such systems.

Cross-point switches have found wide use in communications systems particularly in telephony. Such switches are relatively fast and non-blocking as opposed to multistage switches which tend to be slow and are blocking. A cross-point switch provides a switching matrix having a plurality of bidirectional switches that can connect a bidirectional data line connected to the switch to any other bidirectional data line connected to the switch. The routing of the signals with the switch matrix is performed by a controller.

The controller is essentially a programmable computer that functions to select an appropriate combination of cross-points to open and close for appropriate routing of the signals. A variety of such controllers have been proposed and used in the prior art.

One class of controllers is used primarily in telephony systems in which switching occurs at a leisurely pace since once the interconnections have been established they remain set for substantial periods of time.

Cross-point switches may also be used to advantage in computer systems having multiple or plural computers, particularly parallel processors. A high bandwidth switch is needed to fully realize the benefits of parallel processing. Generally, these cross-point switches and controllers must be very fast since the interconnections between computers remains set for only very short periods of time.

For example, cross-point switches find application in fault tolerant computing systems, that is systems in which one processor must take over in the event of failure of another. In such case it is necessary to get data, etc. from the failed processor to the functioning processor as quickly as possible.

Cross-point switches also find application in computer systems in which there are multiple servers in which it is necessary to get service quickly.

In the case where the cross-point switch is to be used in the multiprocessing environment, where the communications are generally short-lived, a controller which requires a long time to establish interconnections will severely reduce the effective bandwidth of the cross-point switch and thereby effectively eliminate the advantages to be gained from a multiprocessing configuration. From the time a data line interconnection is requested to the time it is completed the data simply cannot flow. Accordingly, the throughput of the associated computer system is decreased.

This is particularly important in tightly coupled systems, that is, those in which a number of processors share memory and an operating system. Such a switch can be provided in the multiprocessing environment by a non blocking, cross-point switched star network whose control is provided by a single, serialized controller.

The function of the controller is to establish or break connections between any two switch ports that receive control information from the system components they are attached to.

A fast controller, having a pipelined structure for enhanced performance is described in U.S. patent 4,630,045.

Although a computerized controller will operate relatively quickly, a number of machine cycles are required to effect the connection by a controller and there is a corresponding delay. This delay is particularly significant in the one-sided switch described above since there are a multiplicity of possible connection paths from which to choose. In the aforementioned cross-point switches there is a delay that results since the request for service must first be transmitted to a processor functioning as a task allocator. The controller must, after determining which processors are idle, advise the switch which then in turn sends the task or data onto the processor selected by the controller.

Accordingly, it is an object of the invention to provide a cross-point switch having a minimum delay.

It is a further object of the invention to provide a cross-point switch that does not need to be directed by a separate processor.

These and other objects, advantages and features of the invention will become more apparent upon reference to the following specification and the annexed drawings.

In accordance with an illustrative embodiment demonstrating objects and features of the present invention there is provided a switch for use in a star topology that monitors interprocessor communications activity and uses this information to improve system performance. The switch keeps track of idle processors in the system. When a new task is created for execution on an idle processor, it is sent to a switch which then directly routes it to the first available processor. This eliminates overhead which otherwise is incurred if the task were first transmitted to a processor serving as a task dispatcher from where it would subsequently be sent to an idle application processor.

Fig. 1 shows a topology for a star switch;

Fig. 2 shows a one sided cross-point switch and controller;

Fig. 3 shows an embodiment for the switch according to the present invention; and

Fig. 4. is a timing diagram explaining the operation of a controller that may be used in the present invention.

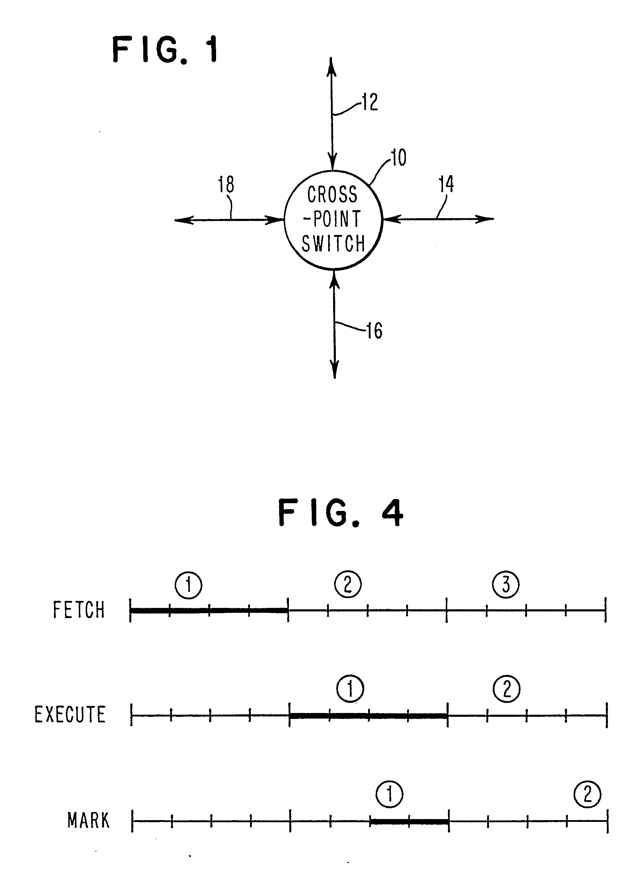

Fig. 1 shows the cross point switch 10 according to the present invention, in a star topology. Cross-point switch 10 is connected to ports 12, 14, 16 and 18 to which, for example, bidirectional data lines 13, 15, 17 and 19 from individual processors are respectively connected. While four ports are shown in Fig. 1, it will be clear to those of skill in the art that any number of ports can be accommodated by a cross-point switch, properly designed according to the principles of this invention as described herein.

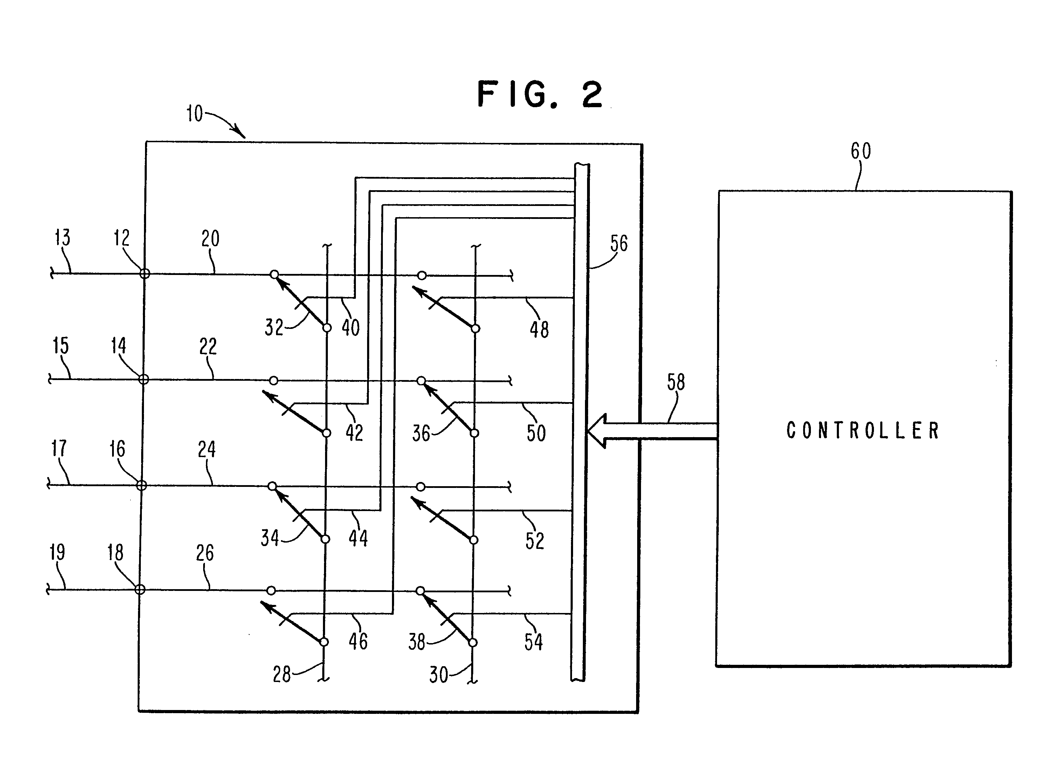

In one form, shown in Fig. 2 and known as a one-sided switch, all data enters and leaves the switch on data lines 13, 15, 17 and 19. Internally, the switch comprises a plurality of non intersecting row lines 20, 22, 24 and 26 and a plurality of non intersecting column lines 28 and 30. Row lines 20, 22, 24 and 26 are connected externally to data lines 13, 15, 17, and 19 via ports 12, 14, 16, and 18 respectively. The individual column lines 28 and 30 are not connected outside the switch but serve only as internal conduction paths.

Usually, the row lines are parallel to each other, and the column lines are also parallel to each other. The row lines and column lines are arranged such that each row line intersects with each column line. Often the row and column lines are arranged perpendicular one to the other.

At each intersection of a row and column, bidirectional switches or cross-points, such as 32, 34, 36, and 38, are provided. Each cross-point serves to connect a row to a column when turned on and thus achieve the connection of data between the data lines.

For purposes of explanation cross-points 32, 34, 36 and 38 are shown turned on, that is the switches are closed. The remaining switches are open, that is, turned off. As shown data line 13 is connected to data line 17 via row line 20, cross-point 32, column line 28 to cross-point 34 and row line 24. Data line 15 is connected to data line 19 via row line 22, cross-point 36, column line 30, cross-point 38 and row line 26. It will be clear, however, to those of skill in the art that virtually any individual data line can be connected to any other through various combinations of cross-points.

Individual control lines 40, 42, 44, 46, 48, 50, 52 and 54 are coupled to controller 60 via bus 56. The cross-points are set by controller 60 which selects which route the signals are to take based on processor activity and the available column lines and cross-points.

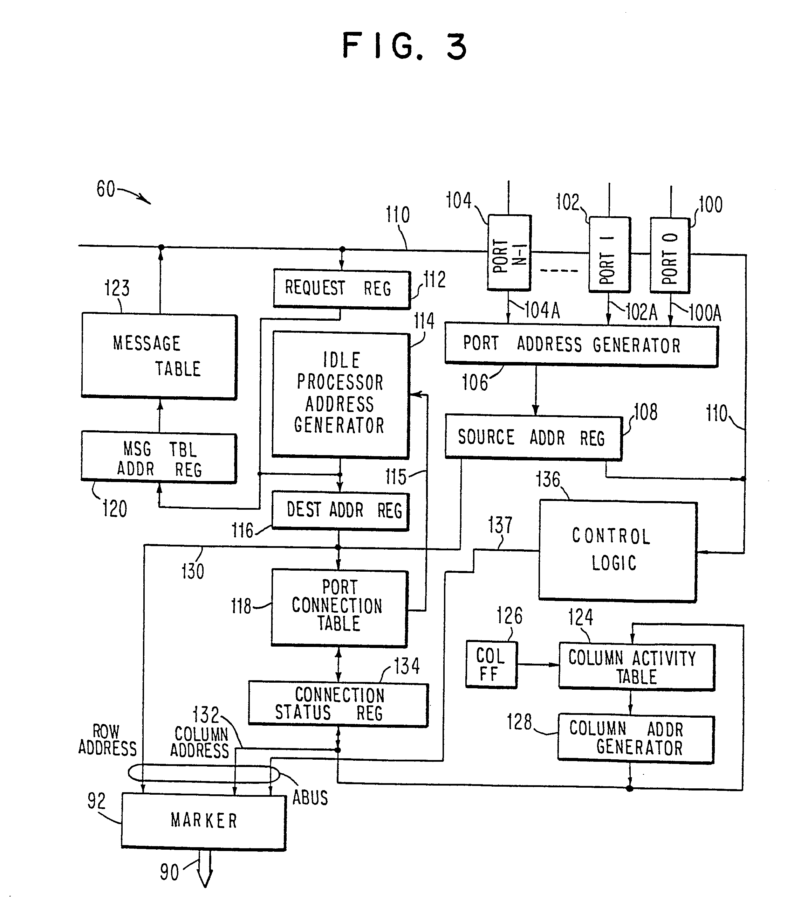

Keeping track of the processor activity is accomplished by switch 10. It is in the best location to make the necessary determinations as to the availability of processors since all interprocessor data and requests mus pass through it. The switch controller, shown in Fig. 3, receives connect/disconnect and status requests in ports 0 (100), port 1 (102) through port N-1 (104). Each port is dedicated to a specific processor. In order to implement task allocation capabilities the switch recognizes two commands, 'allocate task' and 'processor idle'. These commands are recognized by the ports.

The allocate task command causes controller 60 to direct the task message it contains to the first available processor. The status of a processor, that is whether it is idle or busy, is described by means of a bit in the port connection table (118). A second bit in the same entry of the port connection table (118) describes the status of the switch port to that processor, i.e. whether or not it is in use for transferring a message or is free. When an allocate task command is received, controller (60) examines all processor status bits and their associated switch port busy bits to find an idle processor. This is done by means of the idle port address generator 114, which may be an encoder circuit, such as for exaample, the 74F148 TTL integrated circuit manufactured by Texas Instruments, Incorporated and others. The address produced by the idle port address generator 114 is used by controller 60 to establish connection with the non busy processor and transmit the message to that processor.

At the same time controller (60) sets the status bit for the selected processor to busy. Similarly, when a processor terminates the execution of a task, it sends the processor idle command to the switch which then resets the processor's status bit to idle.

The examination of the port connection table (118) is performed very quickly, and can be completed in a time equivalent to the transmission time of a few message bits. Thus, a message can be routed to the task dispatcher to be processed there and then sent to the destination again via the switch.

The embodiment shown in Fig. 3 uses the pipelined operation described in the above referenced U.S. patent 4,630,045. This structure is fast and, due to its speed, may be advantageously used in the present invention. It will be clear, however, to those of skill in the art that other controllers and switches may be used although there may be some sacrifice in speed.

An embodiment of the controller of the present invention is shown in block diagram form in FIG. 3. The external data lines are connected to the N ports 100, 102 and 104 which are capable of recognizing when these lines carry a service request. Not shown are the connections between the service lines or ports 100, 102 or 104 to the data inputs of the switching matrices. These ports may include latches so that if a service request cannot be immediately performed, the request is held, pending service. Each of the ports 100, 102 and 104 is connected by a service requesting line 100A, 102A and 104A to a port address generator 106 which generates the address of the port making the request. The port address generator 106 also serves to arbitrate which port is to be serviced if more than one port requests service at the same time. The address of the selected port is fed to the source address register 108. The selected port writes its service request onto an internal control data bus 110 and this request is then written into a request register 112. The service request may contains two types of information, that is whether it is a request for connection or disconnection and, if it is not a request to find an idle processor, the destination port for the connection.

Idle processor address generator 114 provides the address of an idle processor by receiving the processor status and port busy bits for each entry from port connection table 118 over connecting lines 115.

The choice of a column to make a connection is somewhat arbitrary, but those columns presently being used for other connections must be avoided. Also, in a fault tolerant system, columns that have failed must also be avoided.

Even though a destination port has been requested it may not be available. It may already be in use either as a requesting or requested line. Therefore, port connection table 118 is used to keep track of which ports are busy at any particular time. The port connection table 118 is set up as a multiword memory in which addresses correspond to ports. Information as to whether a port is busy is stored at an address. The port connection table is also used to record the column being used for a busy port and as, stated before, whether the processor connected to the port is idle or busy. It should be noted that since a processor can remain busy after data has been transferred to it, even though the port is no longer busy, a separate bit is needed to indicate the status of the processor.

Therefore the location within the port connection table 118 that is addressed by the destination register 116 contains an indication as to whether the requested port or destination is available and whether the particular processor is idle or busy. This processor availability information is loaded into a message table address register 120 which addresses a message table 122 connected via the internal control data bus 110 to the ports 100, 102 and 104. If the request is unsuccessful because there is no processor available, then a message is transmitted back through the requesting port to the requesting device on the external line.

The information as to what columns are available to complete the interconnection is contained in the column activity table 124, which is a register having a number of bits equal to the number of columns in the system. If a bit in the column activity table 124 is set to 1, that column is denoted as being busy. A column flip/flop 126 contains a 1 when a connection is being requested and when a disconnection is requested. A column address generator may simply select the first available column or it may perform more intelligent allocation dependent upon system considerations not discussed here. The column activity table 124 can also be used to prevent a failed column from being subsequently used by ensuring that each failed column is marked with a 1 upon detection of its failure.

At this point, all the required information to perform cross-point switching is available. The source address is available from the source address register 108, the destination address is available from destination address register 116, and the column being used is available from column address generator 128. This data is directed to row address bus 130 and the column address bus 132. The two busses 131 and 132 form part of the control bus or A bus leading to marker 92. Marker 92 directly controls the cross-point switching matrices.

As described port connection table 118 can not only indicate which ports and processors are in use but also to which column the port is connected. This may be achieved by transferring the output of the column address generator 128, which denotes the column to be used for interconnection into a connection status register 134. Then the value of the connection status register 134 is used to fill the two locations in port connection table 118 addressed by the source address register 108 and the destination address register 116.

Control logic 136 times all of these operations and directs the flow of data. Separate control lines, not shown, interconnect control logic 136 to all the circuit elements of Fig 3. Control logic 136 provides timed control pulses to each of the circuit elements to enable them to either receive or transmit data on other lines at the proper times as described later for the flow of information in the controller. A clock provides a timing signal to control logic 136 to determine the execution rate of controller 136. Control logic 136 may be implemented as a read only memory (ROM) addressed by a counter and driven by the clock. The ROM contains the proper control signals for each step in controlling the switch. Since, however, out of sequence instruction execution is often required, the counter must be able to handle different sequences. As an

4

alternative, a programmable logic array (PLA) could be used which, for each count of the clock, generates the proper control signals and the address for the next count based also on data fed to the control logic 136 from the circuit elements.

Controller 136 may also be a programmable microprocessor that provides parallel control output signals. Such microprocessor control circuits, and how to apply them, are widely known in the art. Output signals on controller bus 137 are also used for part of the control bus or A bus provided to marker 92.

Generally, two different types of service requests will need to be handled by the switch of the present invention, namely, a request for task allocation and a request for processor idle. The request for task allocation includes cases where there are processors available and cases when there no processors available.

Control logic 136 must be able to handle each of these three distinct cases. In the case of available processors, the switch internally connects the ports of the requested and destination processor in order to transmit the task allocation message and disconnect the two ports.

Control logic 136 will operate on the request in three steps or phases. In the first phase a request is received from a port and processed to determine what it is and whether it can be done. In this embodiment of the invention the request fetch is the same for all three cases.

In the next phase the request is executed. The operation of this phase will depend upon what type of request has been made. The control logic 136 has received the request over the internal control bus 110 when the request was written into the request register 112 or alternatively can read the request from over the internal control bus 110. If the request can successfully be completed, then there is a third phase in which the cross-points are marked. In Fig. 3, the marker is separated from the controller, but it is to be understood that both exercise control functions, and therefore the marker can be properly incorporated into the controller.

The sequence of operations for the two types of service requests will now be described. These operations will be carried out in the separate circuitry indicated in Fig. 3 but under the control of the control logic 136.

The operations for a task allocation request when there are destination processors available are shown in Tables 1 and 2 where the instructions are acronyms corresponding to the elements of Fig. 3. The acronyms are indicated in parentheses after the first occurence of the instruction in the following description.

In the first step of the first phase or of the request fetch, a new port address is generated by the port address generator (PAG) 106 when it responds to a requesting line from one of the ports (PORT) 100, 102 and 104. With the port address known, the contents of that port are transferred in a second step to the request register (RR) 112 over the internal control data bus 110.

TABLE 1

TASK ALLOCATE - DESTINATION AVAILABLE
(CONNECT SWITCH PORTS)
----------------------------------------------------

I. REQUEST FETCH
_____

1.  PAG ← PORT          Generate New Port
                        Address

2.  RR ← PORT(PAG)      Read Request Off
                        Port

3.  DAR ← IPG(PCT)      Generate Address of
                        Idle Processor

4.  SAR ← PAG           Set Source Address
                        Register

    MTAR ← (IPG)        Select Return
                        Message


II. REQUEST EXECUTE
_____

1.  CSR ← CAG           Prepare to Update
                        Connection

    COL FF ← 1          Prepare to Update
                        Column Activity

2.  ABUS ← DAR          Place Destination
                        Address on Bus

    ABUS ← CAG          Place Column
                        Address on Bus

    PCT(DAR) ← CSR      Update Destination
                        Connection Entry
                        Set Destination Busy Bit
                        and clear Processor Not
                        Idle Bit


    CAT(CAG) ← COL FF   Update Column
                        Activity

6

```
3.  ABUS ← SAR                Place Source
                              Address on Bus

    ABUS ← CAG                Place Column
                              Address on Bus

    PORT(SAR) ← MT(MTAR)      Place Return
                              Message into Port

    PCT(SAR) ← CSR            Update Source
                              Connection Entry

4.  CAG ← CAT                 Generate New Column
                              Address
```

## III. MARK CROSS-POINTS

The port address generator 106 determines which of the ports is to be connected to the bus. The information in the request register 112 is the request which contains both the type of request, whether for task allocate or processor idle. In a third step, the idle processor address generator (IPG) 114 generates the address of an idle processor that is available to perform a task and provides this address to Destination Address Register 116 (DAR).

A fourth step in the request fetch is divided into two substeps, all of which are processed simultaneously In the first substep, the contents of the port address generator 106 are transferred to the source address register (SAR) 108. The source address is the number of the port that has made the request. Simultaneously, in the second substep, register MTAR 120 is loaded with a pointer message into table 123. At this point, the information is available to the control logic 136 as to not only what type of service has been requested, as indicated in the request on the internal control bus 110, but also whether a requested connection can be made, as indicated in the contents of the destination address register 116. The word fed into the message table address register 120 is used to select a return message to be sent back through the requesting port to the requesting device. Because several requests may be awaiting service in the ports 100, 102 and 104, a return message is required to notify the requesting device that its request is being processed. Furthermore, if there is no available processor, this information needs to be transmitted back to the requesting device so that it may proceed accordingly. In the above described steps of the first phase of the request or the request fetch, intermediate information has been generated which determines the type of request, the physical port selected and whether the request can be honored.

In the second phase of a connection request, after it has been determined that an idle processor is available, and not just that the port it is coupled to is not busy, the request is executed as follows. A first step is divided into two parallel substeps The contents of the column address generator (CAG) which have previously been generated are written into the connection status register (CSR) 134. This is done in preparation to updating the port connection table 118 with the information as to what column is going to be used for this interconnection. As will be described for the fourth step below, at the end of every request execution for a successful connection request or disconnection request, a new column address is generated for the column to be used for the subsequent connection request. Concurrently with the connection status register 134 being written into, as described above, the column flip/flop 126 (COL FF) is set to 1 which will be subsequently used to indicate that a column has been placed into service.

A second step of the execution for a successful connection request is divided into four concurrent substeps. The destination address is read from the destination address 116 onto the row address line 130 of the control bus which is designated as the A bus. The column address is also read from the column address generator 128 onto the column address line 132 of the A bus. Simultaneously, the port connection table 118 is updated by loading the contents of the connection status register 134, which are the column to be used for the new connection as well as a bit indicating connection, into the port connection table 118 at the location addressed by the destination address register 116. Therefore, the entry in the port connection table 118 for the destination port contains the number of the column that is used for this connection as well as the bit indicating that this port will be in use. Also the "Processor Not Idle Bit" must be set. Concurrently with the above three substeps, the 1 contained in the column flip/flop 126 is read into the column activity table 124 at the bit position that is addressed by the column address generator 128. That is to say, the bit in the column activity table 124 for the column that is to be used for this connection is set to 1, indicating that it will be in use.

A third step in the execution for a successful task allocate request is divided into four concurrently processed substeps. The source address for the requesting port is placed on the A bus by being read from the source address registers 108 onto the row address line 130. The column address is once again placed on the A bus by being read from the column address generator 128 onto the column address line 132. Thus, it is seen that the marker 92 must process the column and port addresses for the destination that were put on it in the preceding step, before it can accept the port and column address for the source port in this step. Concurrently, a return message to the requesting device is placed into its port by reading from the message table (MT) 122 the message that is addressed by the message address register 120 into the port that is addressed by the source address register 108, this message being transmitted over the internal control data bus 110. The last concurrent substep of this step is updating the port connection table 118 for source connection. The contents of the connection status register 134 (the column providing the connection), as well as the in-use bit, are read into the port connection table 118 at the location or entry addressed by the destination address register 116, whereby the port making the request is indicated to be in use and to be using a particular column for its interconnection.

In the final step of the execution of a successful connection request, a new column address is generated for a subsequent connection request. The contents of the column activity table (CAT) 124 are read into the column address generator 128 which inspects the table to see which columns, not marked with 1, are available for use and also selects one of these entries for subsequent output as a column to be connected.

The marker performs several routine functions. It decodes the addresses that it receives from the A bus and selects the corresponding switching matrix of the array. Based upon the column and row address for that array, it then sends the proper row and column address to the selected switching matrix. If the switching array is isolated by tri-state buffers, the marker turns on the buffers for the correct row or column. Finally, it turns on the proper cross-point, depending upon the row and column address or sends a command to the matrix to this effect. This control information may be latched on the switching matrix so that the cross-point remains enabled after the control signals on the bus 60 have been removed. The third step of a successful connection request involves marking the cross-points. The marking of the destination cross-point must be performed concurrently with the execution of the third step of the request execution because the A bus will be shortly used for the source addresses. In the following or fourth step, the cross-point for the source is marked.

A controller for a cross-point switching system must not only be able to connect lines, it must also have the capability of disconnecting them. When the transmission of the task allocate message to the available processor is completed, the correspoinding switch ports must be disconnected. The series of operations required for a disconnection request is shown in 2.

## TABLE 2

| TASK ALLOCATE - DESTINATION AVAILABLE |
| :---: |
| (DISCONNECT SWITCH PORTS) |

### I. REQUEST FETCH

| 1. | PAG ← PORT | Generate New Port Address |
| 2. | RR ← PORT(PAG) | Read Request Off Port |
| 3. | DAR ← (RR) | Set Destination Request Register |
| 4. | SAR ← PAG | Set Source Address Register |
| | SR ← PCT(DAR) | Find Column Address |

### II. REQUEST EXECUTE

| 1. | COL ← FF 0 | Prepare to Update Column Activity |
| 2. | ABUS ← DAR | Place Destination Address on bus |
| | ABUS ← CSR | Place Column Address on Bus |
| | PCT(DAR) ← 0 | Update Destination Connection Entry |
| | CAT(CSR) ← COL FF | Update Column Activity |
| 3. | ABUS ← SAR | Place Source Address on Bus |
| | ABUS ← CSR | Place Column Address on Bus |
| | PCT(SAR) ← 0 | Update Source Connection Entry |
| 4. | CAG ← CAT | Generate New Column Address |

### III. MARK CROSS-POINTS

If the internal control data line bus 110 is also connected to the control logic 136, the logic becomes aware, as early as the second step of the request fetch, that the request is for disconnection, rather than connection, and proceeds accordingly for the request execution.

In the first step of the request execute, the column flip/flop 126 is set to zero. This value will be subsequently used to inactivate the appropriate entry in the column activity table 124.

The second step of the processor release request execute consists of four concurrently operating

9

substeps. The destination address is placed on the A bus by reading the destination address register 116 onto the row address line 130. Also, the connection status register 134 containing the interconnecting column information stored in the port connection table 118 is read onto the column address line 132. Thus it is seen that by use of the interconnecting column information in the port connection table 118, it is not required that the device requesting this release specify from which processor it desires to be released. The port connection table 118 is updated for its destination entry by writing a zero into the entry addressed by the destination address register 116. The last concurrent substep is the updating of the column activity table by transferring the zero in the column flip/flop 126 into the entry of the column activity table 124 as addressed by the connection status register 134. As a result, that column is hereafter denoted as available.

A third step of the execution of a processor release request has three concurrently operating sub-steps. The source address is placed on the A bus by reading the contents of the source address register 108 onto the row address line 130. Also, the column address is placed on the A bus by reading the contents of the connection status register 134 onto the column address line 132. Finally, the port connection table 118 is updated for its source connection entry, by setting its location addressed by the source address register 108 to zero, indicating that the source is hereafter available.

The fourth and final step of the execution for the processor release request is the generation of a new column address which proceeds, just as for a successful connection request, by transferring the contents of the column activity table 124 into the column address generator 128.

The marker also has to operate in the processor release request to deselect the appropriate switching matrices and columns and rows and to turn off the previously required tri-state buffers.

In the situation where a task allocation is requested but no processor is available, as shown in the sequence of operations in 3, the request fetch is performed exactly as described previously for a successful connection request.

In the third step, however, the contents of the idle processor generator 114 which are loaded into the destination address register 116 will indicate that the requested connection is presently impossible because there are no available processors. This information is detected by the control logic 136 which then executes the connection request. The first two steps of this request execute are called "no-operations". This means that the time for two steps elapses but nothing is done. This delay is required for the pipeline processing which will be described later. In a third step, a message is returned to the originating device through the requesting port. This is accomplished by reading the message table 122, as addressed by the message table address register 120 onto the internal control data line bus 110 which is selectively connected to the port addressed by the source address register 108. This return message will indicate that the task allocation request cannot be satisfied. A fourth step of the request execution for an unsuccessful task allocation request is also a no-operation. Since no cross-points are set, there is no marking phase. The only real activity externally detected in an unsuccessful task allocation request is the return message.

TABLE 3

_____

TASK ALLOCATE REQUEST - PROCESSOR UNAVAILABLE
------------------------------------------------------------

### I. REQUEST FETCH

| | | |
|---|---|---|
| 1. | PAG ← PORT | Generate New Port Address |
| 2. | RR ← PORT(PAG) | Read Request Off Port |
| 3. | DAR ← IPG(PCT) | Generate Address of Idle Processor |
| 4. | SAR ← PAG | Set Source Address Register |
| | MTAR ← (IPG) | Select Return Message |

### II. REQUEST EXECUTE

| | | |
|---|---|---|
| 1. | NOP | No Operation |
| 2. | NOP | No Operation |
| 3. | PORT(SAR) ← MT(MTAR) | Place Return Message into Port |
| 4. | NOP | No Operation |

_____

Finally, in the case of processor idle request, the steps as shown in TABLE 4 are executed.

11

## TABLE 4

| PROCESSOR IDLE REQUEST | | |
|---|---|---|

### I. REQUEST FETCH

| 1. | PAG $\Leftarrow$ PORT | Generate New Port Address |
|---|---|---|
| 2. | RR $\Leftarrow$ PORT(PAG) | Read Request Off Port |
| 3. | NOP | No Operation |
| 4. | SAR $\Leftarrow$ PAG | Set Source Address Register |
| | MTAR $\Leftarrow$ (RR) | Select Return Message |

### II. REQUEST EXECUTE

| 1. | NOP | No Operation |
|---|---|---|
| 2. | NOP | No Operation |
| 3. | PCT(SAR) $\Leftarrow$ CSR | Update Source Connection Set Processor Idle Bit Entry |
| | PORT(SAR) $\Leftarrow$ MT(MTAR) | Place Return Message into Port |
| 4. | NOP | No Operation |

The first and second steps are as described previously for a successful task allocation request. The third step, generating the address of the idle processor, is not applicable and therefore replaced with a no operation. In the fourth step, in addition to and simultaneously with the setting of the source address register, a pointer from request register 112 is loaded into message table address register 120.

The second phase of the processor idle request includes one step having two concurrently processed substeps. In the first substep the port connection table 118 is updated for source connection. The contents of connection status register 134 (the column providing the connection) as well as the in use bit, are read into the port connection table at the location or entry addressed by the destination address register 116. In the second substep a message is placed onto the port so that the requesting device may be notified, if necessary, of the impending action and the port electronics may be reset. This message is sent by outputting the message in the message table 122 addressed by the message table address register 120 to the port addressed by the source address register.

The sequences of operations shown in Tables 1, 2, 3 and 4 have been carefully chosen to allow a parallel/pipeline operation for the controller. This operation will be explained with reference to Fig. 4 which shows timing diagrams for the phases of either a connect request or a disconnect request. Each phase is separated into four sequential steps. If the steps are operating at a step rate, the phase rate is one quarter of the step rate. For a particular request, the execute phase follows the fetch phase because it relies upon information generated in the fetch phase. The mark phase is a little different. It consists of only two steps which operate during the last two steps of the corresponding execute phase. Each of its steps depends upon information generated in the immediately preceding step of the execute phase. The steps shown are sequentially executed, i.e., in the order indicated in Fig. 4, because they generally rely upon information generated in the immediately preceding step. However, many of the steps consist of several substeps, each of which may be executed simultaneously because the input of one of them does not depend upon the output of another. Thus if four substeps are operating simultaneously, this execution is performed four times faster than if the substeps were instead of sequential steps. This provides the parallel characteristics of the operation of this processor and allows much faster response of the controller.

A close inspection of the steps involved in the various phases of the different requests will indicate that different phases of two separate requests can be executed simultaneously without an inadvertent interchange of parameters between requests. For example, as shown in Fig. 4, once the fetch phase for a connection request has been completed, the execute phase of that same request begins. It is further possible, however, for a fetch phase of a second request to begin as soon as the fetch phase of the first request ends. Likewise, the execute phase of the second request can immediately follow the execute phase of the first request. At this time also, a third request can be fetched. This simultaneous sequential processing of a multiple request is called "pipeline operation". The request moves down the pipeline from the fetch phase through the initial part of the execute phase into the mark phase. As it leaves the fetch phase, a subsequent request can take its place as it progresses onto the next phase. The pipeline operation provides not speed but throughput. More requests can be serviced in a given time if multiple requests are being simultaneously handled. Previous controllers, such as that described by Haben et al. in U.S. Patent No. 4,229,624 have used logic circuitry operating in parallel and in two stages. However, it is believed that no prior controller has combined this feature with a pipelined controller operating under a common logic command circuitry to simultaneously process two requests.

The cross point switch of this invention can not only operate with minimum delay and operate at a high throughput rate, but it also provides additional flexibility. As described previously, the idle processor generator address 114 provides for dynamic allocation of ports without the need to examine the destination tables in all the requesting devices connected to the ports. Furthermore, different interconnection routes may be chosen over the different columns. If for some reason a column becomes inoperable, the column activity table 124 or the column address generator 128 may be programmed so that the failed column is subsequently avoided. The column address generator 128 may also intelligently choose a column for interconnection based upon other system considerations.

## Claims

1. A star topology switch coupled to a plurality of processors and system memory characterized by
a switching array.
means for receiving a request for task execution;
means for determining an idle one of said plurality of processors; and
means for transferring said task to be executed to said idle processor.

2. A star topology switch coupled to a plurality of processors and system memory, and including a controller. wherein said processors can originate an allocate task command a a processor idle command, indicating said processor is idle. said controller characterized by:
a switching array
means for receiving said allocate task command and said processor idle command; and
means for transferring a task to be executed to an idle processor.

3. The switch according to claim 2 characterized in that
said receiving means includes a plurality of ports, each of said ports being coupled to one of said plurality of processors.
said controller further comprises a port connection table for storing information, said information including the processor status and port status, said processor status information being set in accordance with said processor idle command and indicates whether a processor is idle or busy, and said port status information being set according to whether a particular port is in use; and by
means for reading said information from said port connection table upon receipt of said allocate task command.

4. The switch according to claim 3 wherein said controller characterized by
means for supplying a connection request for a connection to be changed across a physical switching array of cross-points. said connection request not being necessarily honored;
first means for receiving said request and comprising separate means, operating in parallel, for providing intermediate information on (1) whether said request is
of said first or of second type and (2) a present status of said switching array;
second means for receiving and processing said intermediate information from said first means and generating control signals for said switching array; and

logic circuitry for controlling said second means as it processes a first request and for simultaneously controlling said first means as it operates on a later accepted second request, whereby said control signals cause said switching array to connect said source data line to the requested destination data line or to disconnect said source data line from its connected data line.

5. The switch according to claim 4, characterized in that said controller further comprises a connection table for current connectivity information of said data lines and wherein said first means comprises means for fetching a request from said supplying means and determining from said connection table if said destination line is currently used and wherein said logic circuitry reads said request to determine the type of said request and controls said second means according to said type and said availability and wherein said second means includes means for executing said request and for updating said connection table.

6. The switch according to claim 5
characterized in that
said supplying means comprises ports connected to each of said data lines for recognizing said request and directing said request to said first means.

7. The switch according to claim 6
characterized in that
said switching array is a one-sided switching array comprising rows connected to said data lines, internal columns and cross-points therebetween, and that said second means further comprises a table for current usage of said columns and means for selecting one of said columns indicated by said current usage table to not be currently used, and wherein said second means supplies the addresses of two cross-points.

# FIG. 1

# FIG. 4

# FIG. 2

EP 0 293 616 A2

# FIG. 3